Europäisches Patentamt

European Patent Office

Office européen des brevets

(19)

(11) **EP 0 961 759 B1**

(12) **FASCICULE DE BREVET EUROPEEN**

(45) Date de publication et mention
de la délivrance du brevet:
**05.12.2001 Bulletin 2001/49**

(51) Int Cl.⁷: **C02F 1/52**

(21) Numéro de dépôt: **98904219.7**

(22) Date de dépôt: **26.01.1998**

(86) Numéro de dépôt international:
**PCT/FR98/00134**

(87) Numéro de publication internationale:
**WO 98/32702 (30.07.1998 Gazette 1998/30)**

(54) **PROCEDE DE TRAITEMENT PHYSICO-CHIMIQUE D'EFFLUENTS, NOTAMMENT D'EAUX DE SURFACE DESTINEES A LA CONSOMMATION**

VERFAHREN ZUR PHYSIKALISH-CHEMISCHEN BEHANDLUNG VON WASSER, INSBESONDERE VON FÜR DEN VERBRAUCH BESTIMMTEM OBERFLÄCHENWASSER

METHOD FOR THE PHYSICO-CHEMICAL TREATMENT OF EFFLUENTS IN PARTICULAR SURFACE WATER FOR CONSUMPTION

(84) Etats contractants désignés:
**AT BE CH DE ES FR GB IT LI NL PT SE**

(30) Priorité: **27.01.1997 FR 9700846**
**29.12.1997 FR 9716634**

(43) Date de publication de la demande:
**08.12.1999 Bulletin 1999/49**

(73) Titulaire: **DEGREMONT**
**92508 Rueil-Malmaison Cédex (FR)**

(72) Inventeur: **VION, Patrick**
**F-78800 Houilles (FR)**

(74) Mandataire: **Armengaud Ainé, Alain et al**
**Cabinet ARMENGAUD AINE**
**3 Avenue Bugeaud**
**75116 Paris (FR)**

(56) Documents cités:
EP-A- 0 680 933         FR-A- 1 411 792
FR-A- 2 071 027         FR-A- 2 348 156
US-A- 4 309 291         US-A- 4 388 195
US-A- 5 143 625

**Description**

La présente invention concerne un procédé de traitement physico- chimique d'effluents notamment d'eaux de surface destinées à la consommation.

On sait que la mise en oeuvre de procédés physico-chimiques est commune à la plupart des traitements appliqués aux différents types d'eaux et que ces traitements consistent essentiellement en:

- une clarification des eaux de surface pour la consommation ou pour les industries,
- une clarification des eaux usées urbaines, pluviales ou industrielles,
- une décarbonatation
- une élimination des phosphates, etc.

Ces types de traitements physico-chimiques comprennent toujours les étapes successives suivantes :

- une coagulation : étape de neutralisation des colloïdes avec un sel métallique, composé trivalent du fer ou de l'aluminium en général, pour former un microfloc. Cette étape de coagulation peut être réalisée en une ou plusieurs étapes ;
- une floculation : étape d'agglomération et de croissance du microfloc. Cette étape d'agglomération s'effectue grâce à l'addition d'un polyélectrolyte (ou polymère), en aval de l'étape de coagulation ;
- une décantation : étape de séparation du floc et de l'eau interstitielle, entraînant la production de boues d'une part, et d'eau clarifiée, d'autre part .

Depuis une trentaine d'années, l'état de la technique relatif à un tel traitement physico-chimique a considérablement évolué par suite de l'apparition de deux technologies :

- la floculation avec masse de contact qui a permis d'améliorer la qualité des flocs, de réduire le volume des réacteurs et d'améliorer la clarification.En effet, les microflocs de la coagulation ont d'autant plus de chance de s'agglomérer et de croître que le milieu de réaction comporte une grande densité de particules : la vitesse de formation du floc est proportionnelle au nombre de particules libres dans la suspension.

- la décantation lamellaire, réalisée par introduction de plaques ou de tubes inclinés, dans les décanteurs. Cette technologie a permis de réduire la taille desdits décanteurs dans une proportion de 50 à 70%.

L'évolution technologique actuelle vise à l'amélioration des conditions de floculation, qui sont déterminantes quant à la qualité de l'eau traitée et à l'obtention de vitesses de décantation élevées .

A ce jour, les décanteurs modernes utilisent deux types de masses de contact dans le réacteur de floculation :

1. la boue décantée et recirculée : un exemple de cette technique est décrit dans FR-A-2 553 082 ;

2. des lests fins, tels que du microsable : un exemple de mise en oeuvre de cette technique est décrit dans FR-P-1 411 792 et dans FR-A- 2 627 704.

La présente invention concerne des perfectionnements apportés aux appareils à boues décantées et recirculées, ces perfectionnements étant tels que lesdits appareils, tout en gardant leurs spécificités et leurs avantages, fonctionnent à des vitesses de décantation beaucoup plus grandes.

Avant de décrire lesdits perfectionnements, on exposera les avantages ainsi que les inconvénients de cette technique connue, à masse de contact boues.

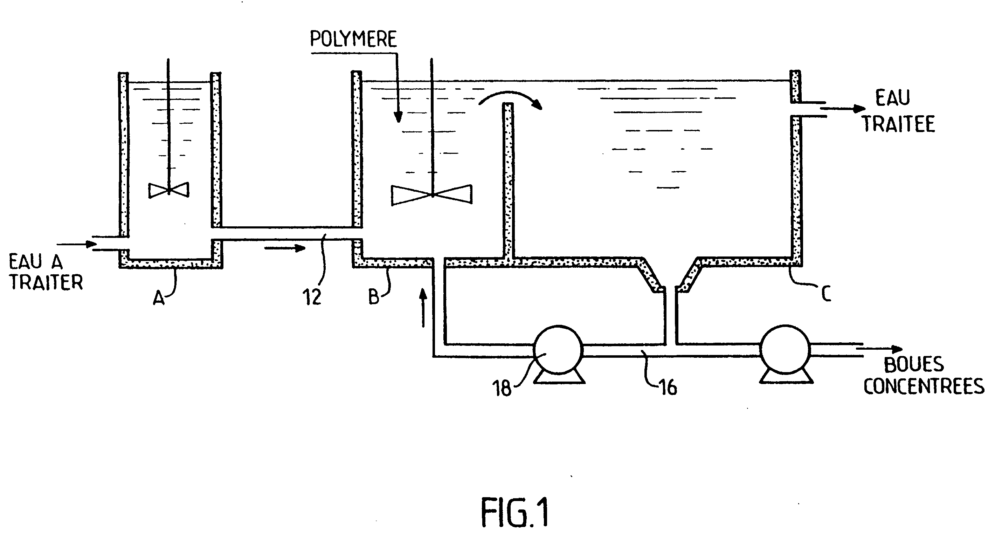

Sur la figure 1 des dessins annexés, on a représenté de façon schématique une installation de traitement physico-chimique mettant en oeuvre cette technique. Sur cette figure, on a schématisé en A le réacteur de coagulation, en B, le floculateur et en C le décanteur. Il s'agit là d' installations bien connues de l'homme de l'art et dans ces conditions, elles ne seront pas décrites.

Ainsi qu'on le voit sur cette figure 1, la masse de contact, dans le réacteur de floculation B est constituée par la recirculation d'une partie des boues décantées en C, cette partie de boues recyclées étant introduite dans le floculateur B par l'intermédiaire de la conduite 16 et de la pompe de recirculation 18. Le débit de boues recirculé représente entre 0,5 et 4% du débit traité. Les boues recirculées, l'eau brute et le polyélectrolyte sont mis en contact dans une zone de fortes turbulences, le polymère ainsi qu'on le voit sur cette figure 1 étant généralement injecté au voisinage de l'hélice 10 du floculateur B. Les boues concentrées en excès sont extraites et évacuées.

Les avantages de cette technique de floculation utilisant la boue décantée et recirculée, en tant que masse de contact sont les suivants :

1 - la masse de contact est générée par le procédé, donc disponible sans limitation de quantité, selon les besoins du procédé ;

2 - dans le réacteur de floculation B, la masse de boues due à la recirculation est très élevée par rapport aux matières en suspension apportées par l'eau brute. De ce fait, le système est insensible aussi bien aux baisses qu'aux montées importantes des matières en suspension de l'eau brute ;

3 - la masse de contact offre une surface spécifique ou une occupation spatiale très importante, du fait de sa structure expansée, de sa faible densité relative ; à titre d'exemple 1 gramme de boues floculées dans un litre (concentration moyenne dans le réacteur) occupe, après décantation d'environ 5 minutes, un volume égal à 100 ml. Cette très grande surface spécifique ou occupation spatiale augmente considérablement la probabilité de contact entre les flocs et les très fines particules, colloïdes coagulés, micro-organismes et donc la probilité de « piéger » ces matières en suspension avec beaucoup d'efficacité ;

4 - du fait de la recirculation continue des boues toujours refloculées, il se produit une densification de celles-ci. Aussi, les boues extraites sont très concentrées (deux à dix fois plus concentrées que les boues de la plupart des appareils) ;

5 - cette technique permet d'atteindre des vitesses de traitement relativement élevées. Ainsi, en clarification d'eau de rivière, les vitesses annoncées au travers des modules lamellaires du décanteur sont comprises entre 10 et 25 $m^3/m^2$.h, ce qui correspond à des vitesses de décantation UD (rapport débit/surface du radier du décanteur) de 6 à 15 m/h. Ces vitesses sont en fait limitées par le flux massique limite (Fml) de la suspension floculée exprimé en kg de matière en suspension transitant par $m^2$ de radier de décanteur et par heure ($kg/m^2/h$),

Le flux massique est le facteur limitant qui détermine la valeur théorique limite de décantation Udl. Cette valeur est liée aussi à la concentration CR des boues dans le réacteur B exprimée en $kg/m^3$ :

$$Fml = CR \times Udl$$

Soit: Udl=Fml/CR.

Si la vitesse de décantation UD appliquée au décanteur C est égale ou supérieure à Udl il y a engorgement. Le décanteur lamellaire est efficace en tant que finisseur mais il est incapable de retenir un lit de boue.

Il faut donc vérifier que le flux massique appliqué sur le décanteur est inférieur à Fml ou que la vitesse de décantation UD appliquée sur le décanteur est inférieure à Udl.

Par exemple, dans le cas de la clarification d'une eau de rivière, le flux massique limite est généralement inférieur ou voisin de 20 $kg/m^3$ .h. La concentration CR exigée pour une bonne floculation est d'environ 1 $kg/m^3$. La vitesse limite de décantation Udl est alors de 20m/h. d'où la vitesse UD appliquée sur le décanteur inférieure à 15 m./h. pour des raisons de sécurité.

6 - Souvent de tels appareils sont suivis d'un système de filtration. C'est le cas en clarification d'eau de rivière. La filtration est caractérisée par la qualité de l'eau filtrée et par la durée du cycle de filtration (durée de fonctionnement à l'issue de laquelle l'encrassement maximal du filtre est atteint, nécessitant un lavage de celui-ci). Avec les décanteurs à recirculation de boues, la durée du cycle de filtration est généralement supérieure à 24 h.

Pour traduire l'aptitude de l'eau décantée à être filtrée avec des durées de filtration correctes, on procède à des tests représentatifs de la filtrabilité de l'eau décantée. Un des tests ainsi utilisables consiste à mesurer le temps nécessaire à filtrer 250 $cm^3$ d'eau décantée sur une membrane de 5 μm et sous un vide de $8.10^4$ Pa. La filtration de l'eau sera d'autant plus aisée que ce temps sera court. Dans le cas d'un décanteur fonctionnant avec une vitesse de décantation UD égale à 15 m/h, la filtrabilité est d'environ 30 secondes.

7 - L'augmentation des vitesses de décantation UD est possible mais au prix d'une augmentation de la dose de polyélectrolyte. Or, un excès de polyélectrolyte réduit la filtrabilité de l'eau décantée (augmentation du temps du test), ce qui se traduit sur un filtre par un colmatage de surface et donc par une réduction de la durée du cycle de filtration.

US-A-4 388 195 décrit un procédé de traitement d'effluents comprenant les étapes successives de coagulation, floculation et décantation, une masse de contact étant introduite dans l'eau issue de l'étape de coagulation, cette masse de contact étant constituée d'une partie des boues densifiées provenant de l'étape de décantation et recyclée dans l'étape de floculation.

La présente invention se propose de perfectionner la technique exposée ci-dessus en vue d'en augmenter les vitesses de décantation, sans affecter la filtrabilité de l'eau décantée.

En conséquence, la présente invention a pour objet un procédé de traitement physico-chimique d'effluents, notamment d'eaux de surface destinées à la consommation comprenant les étapes successives de coagulation, floculation et décantation, une masse de contact étant introduite dans l'eau issue de l'étape de coagulation, donc durant l'étape de floculation, cette masse de contact étant constituée par une partie des boues densifiées provenant de l'étape de décantation et recyclée dans l'étape de floculation, ce procédé étant caractérisé en ce que l'on injecte, dans le circuit de recirculation des boues au moins une partie du polyélectrolyte assurant la floculation.

La présente titulaire a constaté que cette façon de procéder a pour effet inattendu et avantageux d'augmenter le flux massique limite, la vitesse de décantation, la filtrabilité de l'eau brute et la concentration des boues extraites.

Le procédé objet de cette invention et tel que défini ci-dessus peut être mis en oeuvre avec une étape de floculation utilisant un lest comme masse de contact.

On sait que selon cette technique, la masse de contact est obtenue par l'addition, en amont d'un floculateur, d'un lest neuf ou recyclé après nettoyage. Les moyens permettant de séparer et de régénérer le lest devant être recyclé dans le floculateur sont des moyens bien connus de l'homme de l'art et dans ces conditions, ils ne seront pas décrits.

Dans la mise en oeuvre de cette technique, le lest est généralement constitué de sable et les extractions en continu portent sur environ 5% du débit d'eau traité par le décanteur ; ces extractions, chargées de boues enrobant le micro sable, doivent être traitées afin de régénérer ledit sable ; le sable nettoyé est ultérieurement réinjecté en amont du floculateur, en tête de l'installation. Le résidu engendré par ce nettoyage du sable-lest représente les boues en excès.

On notera que les appareils à lest existants et décrits dans la littérature et notamment dans FR-P-1 411 792 et dans FR-A-2 627 704, comportent un recyclage du lest pour des raisons évidentes de coût d'exploitation. Par ailleurs, dans tous les documents décrivant cette technologie, il est précisé que le lest est toujours "nettoyé", c'est-à-dire régénéré. En effet, le lest, "encollé" par le polymère, doit présenter le maximum de surface d'adhésion pour les flocs de précipitation réalisés chimiquement lors de la coagulation. Un nettoyage physique efficace est donc indispensable pour dégager le maximum de surface d'accrochage.

Le lest est souvent un sable, de diamètre généralement compris entre 50 μm et 150 μm, dénommé généralement micro-sable.

La publication Journal Water SRT - AQUA, vo. 41, N° 1, pp. 18-27, 1992, fait état d'une courbe reliant la turbidité de l'eau produite au diamètre des particules de lest qui démontre que ce procédé devient efficace dans la mesure où les particules de sable ne dépassent pas 150 μm, les résultats étant d'autant meilleurs que l'on rejoint des valeurs de l'ordre de 50 à 100 μm.

On remarquera que l'avantage de cette technique de floculation à masse de contact constituées d'un lest fin réside essentiellement dans la vitesse de décantation, qui peut être supérieure de 20% à 200%, par rapport aux vitesses obtenues par les procédés de floculation à masse de contact constituée de boue décantée et recirculée. Ainsi en clarification d'eau de rivière, les vitesses annoncées au travers des modules lamellaires, sont comprises entre 25 et 50 m3/m2.h alors que les équipements mettant en oeuvre le procédé de floculation en utilisant la boue comme masse de contact sont limités à des vitesses comprises entre environ 15 et 30 m3/m2.h.

Les inconvénients essentiels de cette technique tiennent essentiellement au fait que le lest doit assurer deux fonctions différentes:

- une floculation accélérée, grâce à la mise en oeuvre d'une masse de contact à forte surface spécifique (ou occupation spatiale) ;

- l'accélération des vitesses de décantation , résultant de l'addition de lest au floc.

Ces limites ou inconvénients sont imputables aux caractéristiques suivantes

- à masse de contact équivalente (en poids), le lest offre une surface de contact ou pourcentage d'occupation spatiale beaucoup plus faible que la boue. A titre d'exemple :

- dans le cas d'une « floculation avec boues ». la concentration dans le réacteur est d'environ 1 g/l et le volume occupé par la boue après cinq minutes de décantation est d'environ 10% du volume initial ;

- dans le cas d'une « floculation avec lest (par exemple du sable) », la concentration en lest dans le réacteur doit atteindre au moins 5 g/l, alors que le volume occupé par la boue après cinq minutes de décantation n'est que d'environ 1% du volume initial ;

- l'augmentation de la quantité de lest souhaitable pour l'obtention d'une forte masse de contact (et non pour l'obtention d'une forte vitesse de décantation), conduit à augmenter le débit de recirculation vers le système de traitement des boues extraites, traitement qui consiste à séparer le sable des boues, afin de le regénérer. Cette opération est généralement réalisée par des hydrocyclones, alimentés à des pressions élevées, opération qui devient donc fort coûteuse au plan consommation d' énergie. En réalité, et afin de limiter les coûts d'exploitation, le débit de recirculation est volontairement limité entre 5 et 10% du débit traité et la concentration en lest dans le réacteur ne dépasse pas 5 à 10 g/l: ce choix est de toute évidence, incompatible avec la possibilité d'optimiser la floculation.

- Diverses techniques visent à compenser le déficit de masse de contact résultant des conditions opératoires précédemment décrites telles que :

- la mise en oeuvre d'un surcroît d'énergie de floculation (on cite des chiffres allant jusqu'à 100 fois l'énergie classique de floculation) ou

- l'utilisation de particules de lest encore plus fines, augmentant la surface spécifique (par exemple, particules de diamètre compris entre 10 et 50 $\mu$m), ne sont pas envisageables pour des raisons de coût énergétique d'une part et de difficultés de décantation et de séparation sable-floc d'autre part.

En résumé : les performances de la floculation avec lest sont limitées par trois facteurs:

- le système est sensible aux à-coups de pollution par manque de disponibilité de site d'accrochage sur le lest (limitation de la masse de contact à 5, 10 g/l maximum).

- le système est moins performant vis à vis des pollutions dites « sensibles » (oeufs d'helminthes, micro-organismes, micro-particules, traces de composés organiques complexes, pesticides,...)

- la faible concentration des boues extraites, résultant de la nécessité de nettoyer le lest aussi complètement que possible : cette concentration est au moins 10 fois plus faible que celle mesurée sur des appareils à masse de contact boues, et impliquent fréquemment l'installation d'un équipement complémentaire, en aval du décanteur, pour l'épaississement des boues extraites.

La présente titulaire se propose de combiner le procédé tel que défini ci-dessus avec une floculation avec lest, tout en éliminant les inconvénients et limites des procédés classiques rappelés ci-dessus, ce procédé permettant d'obtenir une décantation à grande vitesse.

En conséquence, selon un deuxième aspect, cette invention concerne un procédé de traitement physico-chimique d'effluents , notamment d'eaux de surface destinées à la consommation, comprenant les étapes successives de coagulation, floculation et décantation, caractérisé en ce que, pendant l'étape de floculation, on introduit dans la boue un lest dont la fonction consiste à alourdir cette dernière, en ce que la masse de contact utilisée durant cette étape de floculation est constituée par une partie des boues densifiées provenant de l'étape de décantation et recyclée en continu dans l'étape de floculation, sans opération de lavage, et en ce que l'on injecte dans le circuit de recirculation des boues, au moins une partie du polyélectrolyte assurant la floculation.

Ainsi, selon l'invention on met en oeuvre un lest, utilisé de façon différente de celle du procédé dit « floculation avec lest » décrit ci-dessus. Selon l'invention, le lest ne joue qu'un seul rôle, celui d'alourdisseur et la fonction floculation de la masse de contact est réalisée par les seules boues recirculées. Le lest ne constitue plus une surface d'adhérence offerte aux particules mais il constitue simplement un alourdisseur qui vient s'incorporer dans la boue recirculée vers le réacteur de floculation, cette boue recirculée constituant la masse de contact.

Selon une caractéristique de la présente invention, le lest est constitué d'un matériau présentant une granulométrie comprise entre 50 et 500 $\mu$m, de préférence entre 100 et 300 $\mu$m.

Selon un mode de mise en oeuvre préféré de l'invention, ce lest est un matériau minéral dense (masse spécifique réelle de particule comprise entre 2 et 8 g/ml), notamment du sable, du grenat ou de la magnétite.

Selon la présente invention, les boues densifiées en excès, non recyclées peuvent être rejetées sans traitement ou bien elles peuvent être traitées afin de récupérer le lest, ce traitement ne comportant pas de nettoyage approfondi du lest séparé des boues. En cas de rejet sans traitement, les boues densifiées présentent une meilleure aptitude à la décantation.

Selon l'invention, la récupération du lest s'effectue de préférence par décantation gravitaire, soit à l'intérieur, soit à l'extérieur du décanteur, le lest récupéré étant ensuite recyclé dans l'étape de floculation.

D'autres caractéristiques et avantages de la présente invention ressortiront de la description faite ci-après en référence aux dessins annexés qui en illustrent un mode de mise en oeuvre dépourvu de tout caractère limitatif. Sur les dessins :

- la figure 1 est une vue schématique illustrant le principe du procédé connu décrit ci-dessus de traitement physico-chimique dans lequel la masse de contact utilisée durant l'étape de floculation est constituée par de la boue décantée et recirculée,

- la figure 2 est un schéma de principe, similaire à la figure 1 illustrant le procédé objet de la présente invention, avec double injection de polyélectrolyte et,

- la figure 3 illustre le second aspect de l'invention combinant la double injection de polyélectrolyte et l'addition de lest.

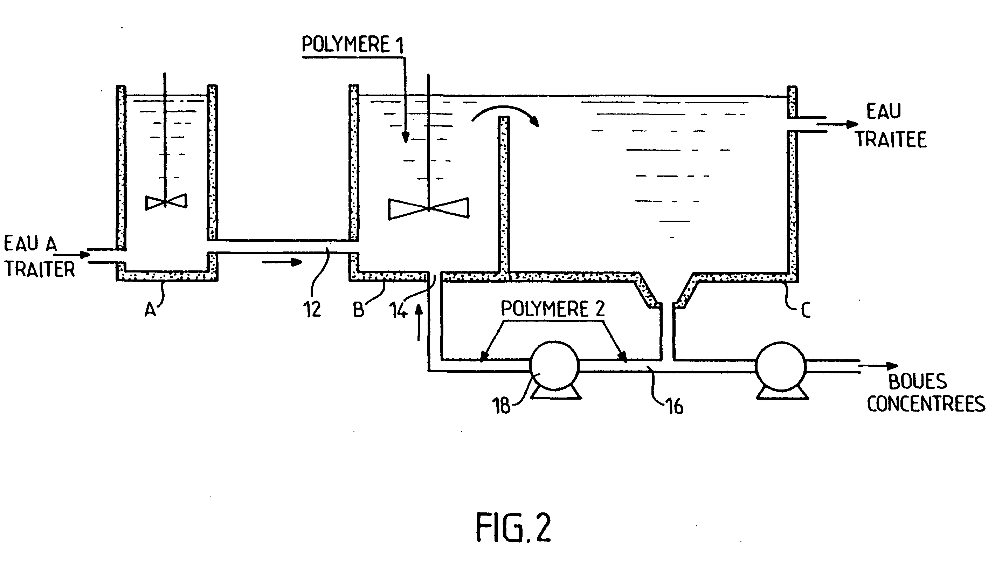

Ainsi qu'on le voit sur la figure 2, la masse de contact dans le floculateur B, comme dans le procédé connu illustré par la figure 1, est constituée par une recirculation en continu d'une partie des boues densifiées, après décantation et épaississement dans le décanteur C. La partie de boues ainsi recyclée est recirculée vers le floculateur B à l'aide de la conduite de recirculation 16, débouchant en 14 dans le floculateur et de la pompe 18. Selon un mode de mise en oeuvre préféré, le débit recirculé représente entre 0,5% et 4% du débit traité.

Selon la présente invention, au moins une partie (polymère 2) du polyélectrolyte nécessaire à la floculation est introduite dans le circuit de recirculation 16 des boues. La partie éventuellement restante du polyélectrolyte (polymère 1) est introduite dans le réacteur de floculation B. Comme on le voit sur la figure 2, cette introduction d'une partie au moins du polyélectrolyte dans les boues recirculées peut s'effectuer en amont ou en aval de la pompe de recirculation 18. Généralement, on effectuera cette injection en amont de la pompe 18 de manière que le mélange boues recyclées + polyélectrolytes bénéficie du brassage de la pompe.

En variante, la partie du polyélectrolyte introduite dans les boues recyclées, peut être mélangée à ces dernières dans un réacteur agité spécifique, placé sur la conduite de recirculation 16.

Selon la présente invention, l'injection primaire de polyélectrolyte (polymère 1) peut s' effectuer dans le réacteur de floculation B, au voisinage de l'hélice 10 de ce dernier comme illustré sur la figure 2, mais elle peut être également réalisée dans la conduite 12 d'amenée de l'eau à traiter dans le floculateur (zone agitée), en amont ou en aval du point d'admission 14 des boues recirculées par l'intermédiaire de la conduite 16.

Selon l'invention, le rapport entre la dose de polyélectrolyte introduite dans le réacteur de floculation B (injection primaire) et la dose injectée dans le circuit 16 de recirculation des boues (injection secondaire) peut varier et être optimisé. La proportion de polymère injecté dans la recirculation des boues peut varier de 10% à 100% du flux total de polymère, 10% est la dose de polymère nécessaire pour obtenir une augmentation significative du flux massique (supérieure à 10%). Il est possible selon l'invention d'injecter 100% du polymère dans le circuit de recirculation des boues. Dans ce cas, les flux massiques sont encore plus importants (100 à 200 kg/m$^3$.h), mais la qualité de l'eau se détériore un peu. En effet, dans ce cas, il n'y a plus suffisamment de polymère libre pour réaliser le collage entre les boues recirculées denses et les microflocs venant de la coagulation de l'eau brute.

Dans la pratique, selon que l'objectif recherché est une forte vitesse UD de décantation (compacité de l'ouvrage) ou une eau traitée de qualité, la proportion de polymère injectée dans le circuit de recirculation des boues, par rapport à l'ensemble du polymère injecté dans l'étape de floculation, variera de 10% à 100% avec un optimum généralement compris entre 20 et 70%.

Selon la présente invention, on peut injecter dans les boues recirculées, un polymère différent de celui qui est injecté dans le réacteur de floculation B. Ainsi, par exemple, on peut injecter un polymère anionique dans le réacteur de floculation B et un polymère cationique dans les boues recirculées.

Selon la présente invention, les boues recirculées peuvent être injectées directement dans le floculateur B, comme illustré sur la figure 2 ou bien dans la conduite 12 assurant la liaison entre le coagulateur A et le floculateur B.

Le procédé objet de la présente invention peut s'appliquer à tout type de traitement d'eau, clarification d'eau pour la consommation ou l'industrie, traitement des eaux industrielles ou urbaines (primaires ou tertiaires...etc.).

Des essais ont été réalisés sur un même pilote d'essai équipé d'un coagulateur A, d'un floculateur B et d'un décanteur C dont la surface de décantation SD était égale à 2m$^2$ et d'un circuit de recirculation des boues 16 présentant une pompe de recirculation 18 de débit adapté. La capacité de ce pilote d'essai était d'environ 100m$^3$/h.

Deux séries d'essais ont été ainsi réalisées sur une eau de surface. La dose de polyélectrolyte a été la même dans les deux cas (0,8 g/m$^3$) mais légèrement plus forte qu'usuellement afin d'essayer d'augmenter les vitesses de décantation UD. Dans la première série 100% du polyélectrolyte a été injecté dans le réacteur de floculation B, au voisinage de son hélice 10 alors que dans la seconde série d'essais, 50% seulement du polyélectrolyte a été injecté au voisinage de l'hélice de floculation 10 et 50% injecté dans le circuit 16 de recirculation des boues. Le pilote était réglé et ajusté de manière que toutes les autres conditions d'essais soient par ailleurs identiques.

Les résultats les plus significatifs sont résumés dans le tableau ci-après.

Tableau

|  | ESSAIS N° 1 | ESSAIS N° 2 |
|---|---|---|
| Eau brute | Eau | de rivière |
| Coagulant (g/m$^3$) | 20 | 20 |
| Polyélectrolyte (g/m$^3$) | 0,8<br>(au voisinage hélice 10) | 0,4<br>(au voisinage hélice 10)<br>0,4<br>(dans recirculation 16) |
| - Flux massique limite Fml (kg/m$^2$/h)<br>- Concentration CR dans réacteur B (g/l)<br>- Vitesse limite Udl (m/h) | 50<br>1<br>50 | 100<br>1<br>100 |
| Vitesse testée dans pilote<br>UD (m/h)<br>UL(m/h) | 25<br>40 | 50<br>80 |
| Turbidité eau traitée (NTU) | 0,5 à 1 | 0,7 à 1,1 |
| Filtrabilité (s) | 60 | 30 |
| Cocentration boues extraites (g/l) | 30 | 45 |

Il ressort de l'étude des résultats figurant dans ce tableau que le procédé objet de l'invention apporte les avantages suivants par rapport à l'état antérieur de la technique:

1) A dose de polymère identique, le flux massique est deux fois plus important, ce qui a permis de tester des vitesses de décantation UD, dans le décanteur, ou UL dans le lamellaire, deux fois plus importantes et ce à qualité d'eau traitée, pratiquement égales. cet avantage se traduisant par une réduction de la taille des appareils ;

2) L'eau décantée présente une meilleure filtrabilité. Le temps de test de filtrabilité (30 secondes) est deux fois plus faible et équivalent à ce que l'on obtient avec des doses de polymère usuelles (environ 0,4 g/m$^3$) et des vitesses de traitement plus faibles (UD = 15 m/h au lieu de 50 m/h.), cette durée plus longue du cycle de filtration entraîne une réduction du nombre de lavages à effectuer sur les filtres.

3) Les boues extraites présentent une concentration améliorée d'environ 50%, ce résultat apportant l'avantage de permettre de réduire la dimension des systèmes de traitement des boues.

On soulignera que dans certains cas, où l'adhérence des microflocs de la coagulation sur la boue dense de la recirculation se fait mal, on peut, selon l'invention prévoir un troisième point d'injection de polymère. Dans ce cas, ce troisième point d'injection est placé de préférence dans la conduite 12 de transfert assurant la liaison entre le coagulateur A et le floculateur B, ou dans un réacteur spécifique intercalé entre le coagulateur et le floculateur.

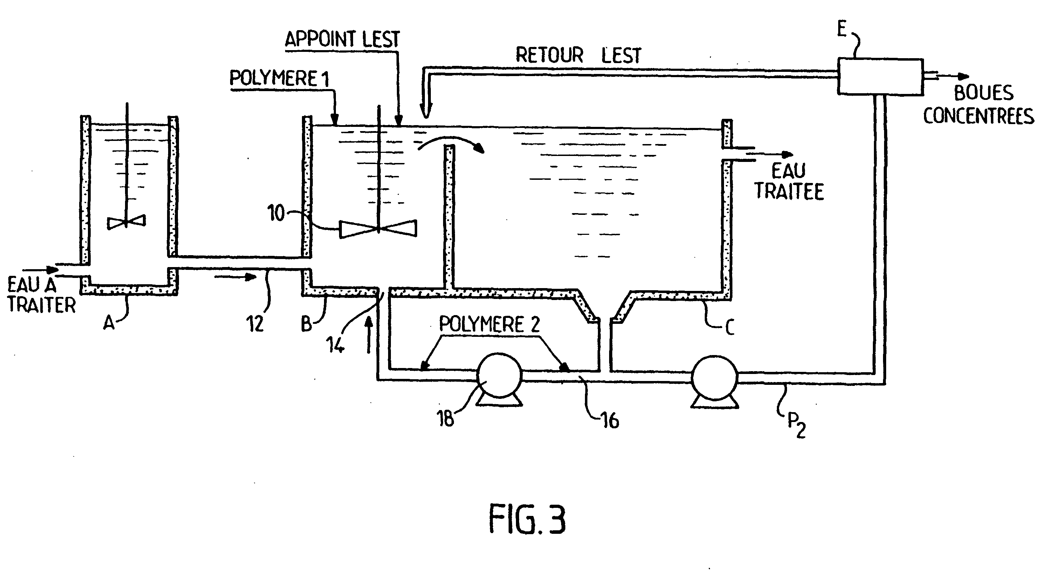

Dans l'exemple de mise en oeuvre illustré par la figure 3, on effectue une addition de lest dans le floculateur B.

Dans ce second aspect de l'invention, suivant le taux de purge des boues densifiées évacuées en P$_2$ et le coût du lest, les boues en excès peuvent être soit purement et simplement rejetées soit, traitées pour récupérer le lest. On notera cependant que le traitement des boues, pour récupération du sable, est différent de celui de la floculation par lest (FR-P-1 411 792 et FR-A- 2 627 704). En effet, selon l'invention, le sable est récupéré sans être nettoyé, c'est-à-dire sans régénération et le traitement s'effectue sur des boues concentrées, puisqu'il n'est pas nécessaire de procéder à un nettoyage approfondi du sable dans la phase de séparation.

Sur la figure 3, on a schématisé en E, les moyens prévus selon l'invention pour assurer la récupération du lest. On notera que le faible débit de boues à extraire, 0.1% à 1% du débit d'eau traité (soit 5 à 50 fois plus faible que dans le cas de floculation avec lest) permet d'utiliser éventuellement des techniques de séparation plus sophistiquées et plus performantes, parmi lesquelles on peut citer notamment :

.    la séparation par hydrocyclone,
.    la séparation par soufflage d'air,
.    la séparation par élutriation,

. la séparation centrifuge,

. la séparation par ultra-son,

ou de réduire le coût énergétique de ce poste de séparation.

Etant donné que le lest a uniquement un rôle de simple alourdissement et non une fonction de masse de contact, le choix de la granulométrie des particules de ce lest alourdisseur, contrairement au cas de la floculation par lest, peut avantageusement être orienté vers des diamètres plus grands . Ainsi, on peut utiliser des particules d'alourdisseur présentant un diamètre compris entre 50 et 500 µm et de préférence, entre 150 et 300 µm alors que dans le cas d'une floculation avec masse de contact constitué d'un lest, la granulométrie de ce dernier doit être inférieure à 150 µm et de préférence comprise entre 50 et 100 µm.

Ce diamètre du lest, dans le procédé objet de l'invention constitue une caractéristique fondamentale pour

- l'augmentation des vitesses de décantation
  si d = 100 µm, vitesse de décantation du lest = 30 m/h
  si d = 250 µm, vitesse de décantation du lest = 115 m/h
- la récupération du lest dans les boues extraites .

On notera que, dans certains cas, si le diamètre du lest est suffisant, une simple séparation gravitaire, à l'intérieur ou à l'extérieur du décanteur, peut être envisagée pour permettre de récupérer et de recycler le lest .

Le procédé selon l'invention, avec floculation avec masse de contact constituée de boues densifiées recirculées présente notamment les avantages suivants :

1. Il offre un très fort pourcentage d'occupation spatiale du matériau d'accrochage, d'où une grande efficacité du traitement :

- stabilité des performances d'épuration, même lors d'une augmentation importante de la charge de l'eau brute ;
- aptitude à l'élimination poussée de pollutions dites « sensibles » (micro - particules, micro-organismes, traces de composés organiques complexes, pesticides, oeufs d'helminthes, etc....).

2. Le lest ne joue que le rôle d'alourdisseur. Sa granulométrie moyenne peut donc être supérieure à celle requise pour la floculation par lest (par ex. 250 µm contre 100 µm). Cette possibilité offre deux avantages :

- les vitesses de décantation sont considérablement accrues et ce, d'autant plus que le diamètre de l'alourdisseur est plus important ;
- la récupération du lest est d'autant plus aisée que son diamètre est plus important.

Dans certains cas, si son diamètre est suffisant il est possible d'envisager une simple séparation gravitaire à l'intérieur ou à l'extérieur du décanteur.

3. Le lest récupéré n'a pas besoin d'être nettoyé, puisqu'on ne cherche pas à régénérer des sites « propres » pour la coagulation / floculation . Il est dès lors possible, et avantageux, d'effectuer la récupération du lest à partir de boues très concentrées, possibilité qui offre les avantages suivants :

- les boues extraites étant à peu près 10 fois plus concentrées, le volume du stockeur-épaississeur installé en aval du décanteur peut être réduit en proportion.
- le système de récupération du sable travaille sur des volumes réduits dans les mêmes proportions (par ex. 10 fois) et, là encore, on peut procéder à une réduction de la taille des équipements et de la consommation d'énergie.

4. La dissociation des fonctions lest - masse de boue pour floculation, permet d'envisager de fonctionner à petit débit ( entre moins de 20% et 80% de Qmax. suivant les cas) sans addition ou recirculation du lest, ce qui permet de réduire encore les coûts d'exploitation.

5 La densification des boues obtenue par la combinaison double injection de polymère et addition de lest permet de réaliser des équipements de décantation à grande vitesse apportant des avantages spectaculaires vis à vis des installations connues.

La variante selon l'invention consistant à combiner l'injection, dans le circuit de recirculation des boues, d'une partie au moins du polyélectrolyte assurant la floculation, et l'addition de lest dans le floculateur est principalement utilisé en cas de production de floc difficile à densifier par le seul polymère ou, surtout, en cas de sur-débit sur l'installation.

**Revendications**

1. Procédé de traitement physico-chimique d'effluents, notamment d'eaux de surface destinées à la consommation comprenant les étapes successives de coagulation (A), floculation (B) et décantation (C), une masse de contact étant introduite dans l'eau issue de l'étape de coagulation, donc durant l'étape de floculation et cette masse de contact étant constituée par une partie des boues densifiées provenant de l'étape de décantation et recyclée dans l'étape de floculation, ce procédé étant **caractérisé en ce que** l'on injecte, dans le circuit de recirculation des boues (16) au moins une partie du polyélectrolyte assurant la floculation.

2. Procédé selon la Revendication 1 **caractérisé en ce que**, pendant l'étape de floculation, on introduit dans la boue un lest dont la fonction consiste à alourdir cette dernière, en s'incorporant dans la partie des boues densifiées, recyclée dans l'étape de floculation.

3. Procédé selon l'une des revendications 1 ou 2 **caractérisé en ce que** le pourcentage du polymère injecté dans les boues recirculées, ou injection secondaire varie de 10 à 100% de la quantité totale de polymère injecté dans l'étape de floculation et dans les boues recirculées, selon que l'on veut respectivement favoriser la vitesse de décantation ou la qualité de l'eau.

4. Procédé selon la revendication 3 **caractérisé en ce que** le pourcentage du polymère secondaire injecté dans les boues recirculées, varie de 20 à 70% de la quantité totale de polymère injecté dans l'étape de floculation et dans les boues recirculées.

5. Procédé selon l'une quelconque des revendications précédentes **caractérisé en ce que** le polymère secondaire injecté dans les boues recirculées est différent du polymère primaire qui est injecté dans le réacteur de floculation (B).

6. Procédé selon la revendication 5 **caractérisé en ce que** le polymère injecté dans le réacteur de floculation (B) est un polymère anionique et, le polymère injecté dans les boues recirculées est un polymère cationique.

7. Procédé selon l'une quelconque des revendications précédentes **caractérisé en ce que** l'injection primaire de polymère est réalisée au voisinage de l'hélice de floculation (10).

8. Procédé selon l'une quelconque des revendications 1 à 6 **caractérisé en ce que** l'injection primaire de polymère est réalisée dans la conduite de transfert (12) entre le réacteur de coagulation (A) et le réacteur de floculation (B).

9. Procédé selon l'une quelconque des revendications précédentes **caractérisé en ce que** l'injection secondaire de polymère s'effectue dans la conduite (16) de recirculation des boues recyclées dans le réacteur de floculation (B), en aval et/ou en amont de la pompe de recirculation (18).

10. Procédé selon l'une quelconque des revendications 1 à 8 **caractérisé en ce que** l'injection secondaire de polymère s'effectue dans un réacteur de mélange polymère-boues recirculées qui est intercalé sur la conduite (16) de recirculation des boues recyclées.

11. Procédé selon l'une quelconque des revendications précédentes **caractérisé en ce que** l'on prévoit un troisième point d'injection de polymère.

12. Procédé selon la revendication 11 **caractérisé en ce que** ledit troisième point d'injection est positionné en amont du point d'injection primaire de polymère, dans la conduite (12) de transfert de l'effluent entre le réacteur de coagulation (A) et le réacteur de floculation (B).

13. Procédé selon la revendication 11 **caractérisé en ce que** ledit troisième point d'injection de polymère est positionné dans un réacteur spécifique qui est interposé entre le réacteur de coagulation (A) et le réacteur de floculation (B).

14. Procédé selon l'une quelconque des revendications précédentes **caractérisé en ce que** l'injection des boues recirculées s'effectue directement dans le réacteur de floculation (B).

15. Procédé selon l'une quelconque des revendications 1 à 13 **caractérisé en ce que** l'injection des boues recirculées s'effectue dans la conduite (12) de liaison entre le réacteur de coagulation (A) et le réacteur de floculation (B).

**16.** Procédé selon la revendication 2 **caractérisé en ce que** ledit lest est constitué d'un matériau présentant une granulométrie comprise entre 50 et 500 µm, de préférence, entre 100 et 300 µm.

**17.** Procédé selon la revendication 16 **caractérisé en ce que** ledit lest est un matériau minéral, dense présentant une masse spécifique réelle de particule entre 2 et 8 g/ml, notamment du sable, du grenat ou de la magnétite.

**18.** Procédé selon l'une quelconque des revendications précédentes **caractérisé en ce que** le débit des boues densifiées constituant la masse de contact, recirculées en continu, après décantation et épaississement, vers l'étape de floculation est compris entre 0,5 et 4% du débit d'effluents traité.

**19.** Procédé selon l'une quelconque des revendications précédentes **caractérisé en ce que** la partie des boues densifiées en excès, non recyclée dans l'étape de floculation et extraite de l'étape de décantation, représente un débit de purge de l'ordre de 0,1 à 1% du débit d'eau traitée.

**20.** Procédé selon la revendication 19 **caractérisé en ce que** les boues densifiées en excès, non recyclées, sont rejetées sans traitement.

**21.** Procédé selon la revendication 19 **caractérisé en ce que** les boues densifiées en excès, non recyclées sont traitées afin de récupérer le lest, ce traitement ne comportant pas de nettoyage approfondi du lest séparé des boues.

**22.** Procédé selon la revendication 21 **caractérisé en ce que** la récupération du lest s' effectue par une décantation gravitaire, soit à l'intérieur, soit à l'extérieur du décanteur, le lest récupéré étant ensuite recyclé dans l'étape de floculation.


**Patentansprüche**

**1.** Verfahren zur physikaliech-chemischen Behandlung von Abwasser, insbesondere von zum Verbrauch bestimmtem Oberflächenwasser, welches die aufeinander folgenden Stufen Koagulieren (A), Ausflocken (B) und Absetzen (C) umfasst, wobei dem aus der Koagulationa stufe kommenden Wasser und somit in der Ausflockungsstufe eine Kontaktmasse zugesetzt wird, die aus einem Teil des aus der Absetzstufe stammenden eingedickten Schlamms, der in die Ausflockungsstufe zurückgeführt wird, besteht, wobei das Verfahren **dadurch gekennzeichnet ist, dass** wenigstens ein Teil des für die Ausflockung sorgenden Polyelektrolyten in den Schlammkreislauf (16) eingebracht wird.

**2.** Verfahren nach Anspruch 1, **dadurch gekennzeichnet, daas** dem Schlamm in der Ausflockungsstufe ein Ballaatstoff zugesetzt wird, dessen Aufgabe darin besteht, jenen zu beschweren, indem er sich in den Teil des eingedickten Schlamms einbaut, der in die Ausflockungsstufe zurückgeführt wird.

**3.** Verfahren nach Anspruch 1 oder 1, **dadurch gekennzeichnet, dass,** je nach dem, ob die Absetzgeschwindigkeit oder die Wasserqualität begünstigt werden soll, der Anteil des Polymers, das dem zurückgeführten Schlamm zugesetzt wird, oder des zweiten Zusatzes von 10 bis 100 % der Gesamtmenge des Polymers variiert, das in der Ausflockungsstufe und dem zurückgeführten Schlamm zugesetzt wird.

**4.** Verfahren nach Anspruch 3, **dadurch gekennzeichnet, dass** der Anteil des dem zurückgeführten Schlamm sekundär zugesetzten Polymers von 20 bis 70 % der Gesamtmenge des Polymers variiert, das in der Ausflockungsstufe und dem zurückgeführten Schlamm zugesetzt wird.

**5.** Verfahren nach einem der vorhergehenden Ansprüche, **dadurch gekennzeichnet, dass** sich das dem zurückgeführten Schlamm sekundär zugesetzte Polymer von dem ersten Polymer unterscheidet, das im Flockungsreaktor (B) zugesetzt wird.

**6.** Verfahren nach Anspruch 5, **dadurch gekennzeichnet, dass** das im Flockungsreaktor (B) zugesetzte Polymer ein anionisches und das dem zurückgeführten Schlamm zugesetzte Polymer ein kationisches Polymer ist.

**7.** Verfahren nach einem der vorhergehenden Ansprüche, **dadurch gekennzeichnet, dass** der erste Polymerzusatz in der Nähe des Flockungsrotors (10) erfolgt.

8. Verfahren nach einem der Ansprüche 1 bis 6, **dadurch gekennzeichnet, das**s der erste Polymerzusatz in der Förderleitung (12) zwischen Koagulationsreaktor (A) und Flockungsreaktor (B) erfolgt.

9. Verfahren nach einem der vorhergehenden Ansprüche, **dadurch gekennzeichnet, dass** der zweite Polymerzusatz in der Kreislaufleitung (16) für den zurückgeführten Schlamm in den Flockungsreaktor (B) nach und/oder vor der Kreislaufpumpe (18) erfolgt,

10. Verfahren nach einem der Ansprüche 1 bis 8, **dadurch gekennzeichnet, dass** der zweite Polymerzusatz in einem Mischreaktor für das Polymer und zurückgeführten Schlamm erfolgt, welcher an der Kreislaufleitung (16) für den zurückgeführten Schlamm zwischengeschaltet ist.

11. Verfahren nach einem der vorhergehenden Ansprüche, **dadurch gekennzeichnet, dass** ein dritter Zugabepunkt für das Polymer vorgesehen ist.

12. Verfahren nach Anspruch 11, **dadurch gekennzeichnet, dass** der dritte Zugabepunkt in der Abwasserförderleitung (12) zwischen Koagulationsreaktor (A) und Flockungareaktor (B) vor dem ersten Zugabepunkt für das Polymer angeordnet ist.

13. Verfahren nach Anspruch 11, **dadurch gekennzeichnet, dass** der dritte Zugabepunkt für das Polymer in einem spezifischen Reaktor angeordnet ist, der zwischen Koagulationsreaktor (A) und Flockungsreaktor (B) geschaltet ist.

14. Verfahren nach einem der vorhergehenden Ansprüche, **dadurch gekennzeichnet, dass** die Einleitung des zurückgeführten Schlamms direkt in den Flockungsreaktor (B) erfolgt.

15. Verfahren nach einem der Ansprliche 1 bis 13, **dadurch gekennzeichnet, dass** die Einleitung des zurückgeführten Schlamms in die Förderleitung (12) zwischen Koagulationsreaktor (A) und Flockungsreaktor (B) erfolgt.

16. Verfahren nach Anspruch 2, **dadurch gekennzeichnet, dass** der Ballaststoff aus einem Material besteht, dessen Korngröße 50 bis 500 µm und vorzugsweise zwischen 100 und 300 µm beträgt.

17. Verfahren nach Anspruch 16, **dadurch gekennzeichnet, dass** der Ballaststoff ein dichtes mineralisches Material, das eine reine Teilchendichte von zwischen 2 und 8 g/ml aufweist, und insbesondere Sand, Granat oder Magnetit ist.

18. Verfahren nach einem der vorhergehenden Ansprüche, **dadurch gekennzeichnet, dass** der Durchfluss des die Kontaktmasse bildenden eingedickten Schlamms, der nach dem Absetzen und Eindicken kontinuierlich in die Ausflockungsstufe zurückgeführt wird, 0,5 bis 4 % des behandelten Abwasserdurchsatzes beträgt.

19. Verfahren nach einem der vorhergehenden Ansprüche, **dadurch gekennzeichnet, dass** der überschüssige Teil des eingedickten Schlamms, der aus der Absetzstufe abgeleitet und nicht in die Ausflockungsstufe zurückgeführt wird, eine Abflussmenge von etwa 0,1 bis 1 % des behandelten Abwasserdurchsatzes ausmacht.

20. Verfahren nach Anspruch 19, **dadurch gekennzeichnet, dass** der nicht zurückgeführte, überschüssige eingedickte Schlamm ohne weitere Behandlung abgelassen wird.

21. Verfahren nach Anspruch 19, **dadurch gekennzeichnet, dass** der nicht zurückgeführte, überschüssige eingedickte Schlamm behandelt wird, um den Ballaststoff zurückzugewinnen, wobei diese Behandlung keine gründliche Reinigung des vom Schlamm abgetrennten Ballascstoffs umfasst.

22. Verfahren nach Anspruch 21, **dadurch gekennzeichnet, dass** die Rückgewinnung des Ballaststoffs entweder im Absetzbecken oder außerhalb davon durch einen Absetzvorgang mittels Schwerkraft erfolgt, wobei der zurückgewonnene Ballaststoff anschließend in die Ausflockungsstufe zurückgeführt wird.

## Claims

1. Process for the physicochemical treatment of effluents, particularly surface waters intended for consumption and comprising successive stages of coagulation (A), flocculation (B) and settling (C), a contact mass being introduced into the water coming from the coagulation stage and consequently during the flocculation stage, said contact mass being constituted by part of the densified sludge coming from the settling stage and recycled to the flocculation stage, said process being **characterized in that** at least part of the polyelectrolyte ensuring flocculation is injected into the sludge recirculation circuit (16).

2. Process according to claim 1, **characterized in that**, during the flocculation stage, into the sludge is introduced a ballast, whose function consists of making the latter heavier, being incorporated into part of the densified sludge, recycled in the flocculation stage.

3. Process according to one of the claims 1 or 2, **characterized in that** the percentage of polymer injected into the recirculated sludge or secondary injection varies between 10 and 100% of the total polymer quantity injected into the flocculation stage and into the recirculated sludge, depending on whether it is respectively wished to favour the settling rate or the quality of the water.

4. Process according to claim 3, **characterized in that** the percentage of the secondary polymer injected into the recirculated sludge varies between 20 and 70% of the total polymer quantity injected into the flocculation stage and into the recirculated sludge.

5. Process according to any one of the preceding claims, **characterized in that** the secondary polymer injected into the recirculated sludge differs from the primary polymer injected into the flocculation reactor (B).

6. Process according to claim 5, **characterized in that** the polymer injected into the flocculation reactor (B) is an anionic polymer and the polymer injected into the recirculated sludge is a cationic polymer.

7. Process according to any one of the preceding claims, **characterized in that** the primary polymer injection takes place in the vicinity of the flocculation propeller (10).

8. Process according to any one of the claims 1 to 6, **characterized in that** the primary polymer injection takes place in the transfer pipe (12) between the coagulation reactor (A) and the flocculation reactor (B).

9. Process according to any one of the preceding claims, **characterized in that** the secondary polymer injection takes place into the recycled sludge recirculation pipe (16) in the flocculation reactor (B) upstream and/or downstream of the recirculating pump (18).

10. Process according to any one of the claims 1 to 8, **characterized in that** the secondary polymer injection takes place into a recirculated sludge-polymer mixing reactor, which is intercalated on the recycled sludge recirculation pipe (16).

11. Process according to any one of the preceding claims, **characterized in that** there is a third polymer injection point.

12. Process according to claim 11, **characterized in that** said third injection point is positioned upstream of the primary polymer injection point in the effluent transfer pipe (12) between the coagulation reactor (A) and the flocculation reactor (B).

13. Process according to claim 11, **characterized in that** said third polymer injection point is positioned in a specific reactor interposed between the coagulation reactor (A) and the flocculation reactor (B).

14. Process according to any one of the preceding claims, **characterized in that** the recirculated sludge is injected directly into the flocculation reactor (B).

15. Process according to any one of the claims 1 to 13, **characterized in that** the injection of the recirculated sludge takes place in the linking pipe (12) between the coagulation reactor (A) and the flocculation reactor (B).

16. Process according to claim 2, **characterized in that** said ballast is constituted by a material having a grain size distribution between 50 and 500 µm and preferably between 100 and 300 µm.

17. Process according to claim 16, **characterized in that** the said ballast is a dense mineral material having a real specific particle mass between 2 and 8 g/ml, particularly sand, garnet or magnetite.

18. Process according to any one of the preceding claims, **characterized in that** the densified sludge flow constituting the contact mass and continuously recirculated following settling and thickening to the flocculation stage is between 0.5 and 4% of the treated effluent flow.

19. Process according to any one of the preceding claims, **characterized in that** the excess densified sludge part not recycled into the flocculation stage and extracted from the settling stage represents a bleed flow of approximately 0.1 to 1% of the treated water flow.

20. Process according to claim 19, **characterized in that** the non-recycled, excess densified sludge is discharged without treatment.

21. Process according to claim 19, **characterized in that** the non-recycled, excess densified sludge is treated in order to recover the ballast, said treatment not including an elaborate cleaning of the ballast separated from the sludge.

22. Process according to claim 21, **characterized in that** the ballast is recovered by gravitational settling, either inside or outside the settler, the recovered ballast then being recycled to the flocculation stage.

FIG.1

EP 0 961 759 B1

EAU
TRAITEE

EAU A
TRAITER

POLYMERE 2

A          12   B   14

18        16

BOUES
CONCENTREES

C

FIG.2

EP 0 961 759 B1

FIG.3